**Europäisches Patentamt**

**European Patent Office**

**Office européen des brevets**

(11) Veröffentlichungsnummer: **0 332 607**
**A2**

# EUROPÄISCHE PATENTANMELDUNG

(21) Anmeldenummer: 89890062.6

(22) Anmeldetag: 07.03.89

(51) Int. Cl.⁴: **G 05 B 19/04**

(30) Priorität: 10.03.88 DE 3807999

(43) Veröffentlichungstag der Anmeldung:
13.09.89 Patentblatt 89/37

(84) Benannte Vertragsstaaten:
AT CH DE ES FR GB IT LI SE

(71) Anmelder: **VOEST-ALPINE AUTOMOTIVE Gesellschaft m.b.H.**
**Derfflingerstrasse 15**
**A-4020 Linz (AT)**

(72) Erfinder: **Seibt, Artur, Dr.**
**Prinz-Eugen-Strasse 6**
**A-1040 Wien (AT)**

(74) Vertreter: **Matschnig, Franz, Dipl.-Ing.**
**Siebensterngasse 54**
**A-1070 Wien (AT)**

(54) **Elektronischer Regler für Kraftfahrzeuge mit Brennkraftmaschinen.**

(57) Ein Elektronischer Regler für Kraftfahrzeuge mit Brennkraftmaschinen, insbesondere mit Dieselmotoren, mit in einem Gehäuse angeordneten Rechen- und Regeleinheiten, die einen oder mehrere Mikrorechner (13, 14) samt Speichern (15) für Programme, Daten etc. aufweisen, der Regler mittels mindestens einer Reglersteckverbindung (4) mit fahrzeug-bzw. motorfesten Gebern, Sensoren, Stellgliedern und der Betriebsspannung verbindbar ist, zumindest ein mit dem Regler verbindbarer Parameterspeicher (19) für motor-und/oder fahrzeugspezifische Daten vorgesehen ist und die Rechen- und Regeleinheiten zur Ermittlung und Abgabe von Stellgliedansteuersignalen und anderer Ausgangssignale in Abhängigkeit der zugeführten Signale der Geber und Sensoren (7, 8, 9) unter Berücksichtigung der Daten des Parameterspeichers eingerichtet sind, wobei dieser Parameterspeicher (19) von dem Reglergehäuse (3) getrennt fahrzeug- bzw. motorseitig untergebracht und über die Reglersteckverbindung (4) mit dem Regler (2) verbindbar ist.

EP 0 332 607 A2

Beschreibung

## Elektronischer Regler für Kraftfahrzeuge mit Brennkraftmaschinen

Die Erfindung bezieht sich auf einen elektronischer Regler für Kraftfahrzeuge mit Brennkraftmaschinen, insbesondere mit Dieselmotoren, mit in einem Gehäuse angeordneten Rechen- und Regeleinheiten, die einen oder mehrere Mikrorechner samt Speichern für Programme, Daten etc. aufweisen, wobei der Regler mittels mindestens einer Reglersteckverbindung mit fahrzeug- bzw. motorfesten Gebern, Sensoren, Stellgliedern und der Betriebsspannung verbindbar ist, zumindest ein mit dem Regler verbindbarer Parameterspeicher für motor-und/oder fahrzeugspezifische Daten vorgesehen ist und die Rechen- und Regeleinheiten zur Ermittlung und Abgabe von Stellgliedansteuersignalen und anderer Ausgangssignale in Abhängigkeit der zugeführten Signale der Geber und Sensoren unter Berücksichtigung der Daten des Parameterspeichers eingerichtet sind.

Derartige Regler, wie sie z.B. aus dem Vortrag vom 10. Mai 1985, Dr.Ing. A. Seibt, "Elektronische Regler für Dieselmotoren", 6. Internationales Wiener Motorensymposion, gedruckt in VDI-Fortschrittsberichte, VDI Verlag, bekannt sind, enthalten als wesentlichen Teil einen Parameterspeicher, welcher der eigentlichen Recheneinheit die Motorkenndaten, d.h. motorspezifische Daten, aber auch fahrzeugspezifische Parameter für die Regelung zur Verfügung stellt. Dem Regler werden weiters verschiedene Betriebsgrößen, wie insbesondere die Motordrehzahl, die Motor- und Lufttemperatur, Ladedruck, Atmosphärendruck und dergleichen mehr sowie die Gaspedalstellung in Form von Signalen zugeführt. Durch ständigen Vergleich der solcherart zugeführten Ist- und Sollwerte werden Ausgangssignale errechnet, deren wichtigstes ein Mengenstellgliedansteuersignal zur Verstellung einer Einspritzpumpe bzw. von Pumpedüsen ist.

Es ist hiebei auch bekannt geworden, den Parameterspeicher als steckbaren Modul auszuführen, der nach Öffnen von außen oder ohne Öffnen des Reglergehäuses in einen Stecksockel gesteckt werden kann, um mit einer einzigen Ausführung des Reglers für verschiedene Motorvarianten die Zahl der Typen zu beschränken.

Diese Lösung, die in der obgenannten Literaturstelle im übrigen nicht näher beschrieben ist, hat jedoch den Nachteil, daß Regler und Parameterspeicher nach wie vor eine Einheit bilden, besonders dann, wenn der Parameterspeicher gegen unbefugtes Entfernen gesichert ist. Bei einem allfälligen Austausch des Reglers, z.B. infolge eines Defektes, ist die Entfernung des Parameterspeichers aus dem defekten Regler und dessen Einsetzen in einen neuen Regler erforderlich, was nicht nur einen gewissen Arbeitsaufwand erfordert, sondern auch - wegen der Möglichkeit des Vertauschens von Reglern - die Quelle verhängnisvoller Fehler darstellen kann.

Die Erfindung hat sich die Schaffung eines Reglers zum Ziel gesetzt, der in der Tat als "Einheitsregler" für die unterschiedlichsten Motor- und Fahrzeugvarianten angesehen werden kann, wobei Betriebssicherheit und einfache Wartung möglich sein sollen.

Dieses Ziel läßt sich mit einem Regler der eingangs genannten Art erreichen, bei welchem der Parameterspeicher von dem Reglergehäuse getrennt, fahrzeug- bzw. motorseitig untergebracht und über die Reglersteckverbindung mit dem Regler verbindbar ist.

Die erfindungsgemäße Lösung gestattet den Aufbau des Reglers als "Einheitsregler" für sämtliche Kraftfahrzeuge mit gleichartigem Antrieb, d.h. mit einem Diesel- oder Ottomotor, wobei der Regler jederzeit und überall auch von ungeübtem Personal ausgetauscht werden kann. Da der Parameterspeicher fahrzeugintern fest im Auto eingebaut ist, ist es unmöglich, daß falsche Parameter bei der Regelung zur Anwendung kommen.

Es werden Kosten sowohl bei der Herstellung der Fahrzeuge als auch bei deren Service gespart.

Weitere Merkmale der Erfindung sind in den Unteransprüchen gekennzeichnet.

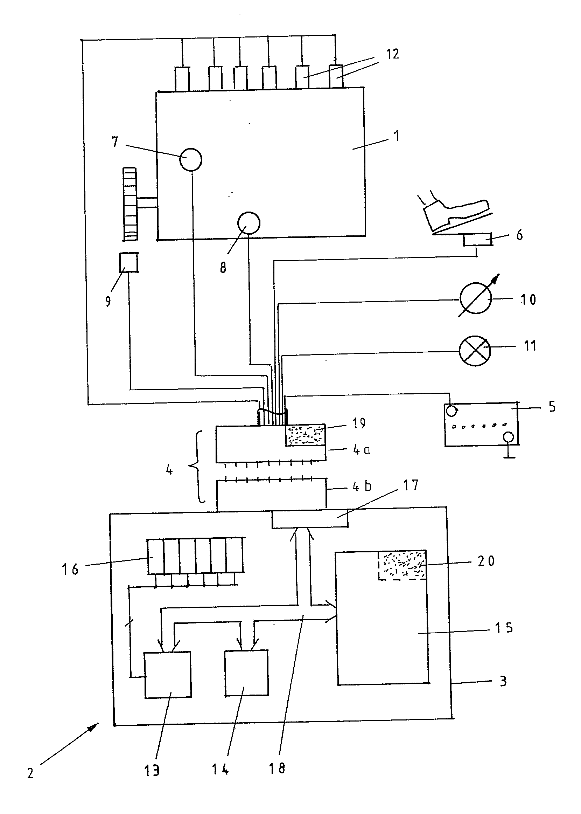

Die Erfindung samt ihren Vorteilen ist im folgenden näher beschrieben und in der beiliegenden Zeichnung veranschaulicht, wobei die Zeichnung in schematischer Weise die Verbindung eines Reglers mit dem Motor bzw. dem Fahrzeug zeigt.

Wie aus der Zeichnung hervorgeht, ist zur Steuerung und Regelung eines Dieselmotors 1 ein elektronischer Regler 2 vorgesehen, bei dem in einem Gehäuse 3 in bekannter Weise ein oder mehrere Mikrorechner mit entsprechenden Eingabe/Ausgabeeinheiten und Speichern, Endstufen, Spannungsversorgungsstufen etc. untergebracht sind. Ein solcher Regler ist meist im Motorraum eines Kraftfahrzeuges untergebracht und über zumindest eine Reglersteckverbindung 4 mit seiner "Außenwelt" verbindbar. Diese Steckverbindung weist eine reglerseitige Steckerleiste 4a und eine fahrzeugseitige Steckerleiste 4b auf.

Dem Regler werden die Spannung der Fahrzeugbatterie 5, das Ausgangssignal eines Gaspedalstellungsgebers 6, eines Motortemperatursensors 7, eines Ladedrucksensors 8 und eines Drehzahlgebers 9 zugeführt. Ausgangssignale des Reglers werden Indikatoren 10, Betriebszustandsanzeiger 11 und den Mengenstellgliedern von Pumpedüsen 12 zugeführt. Der Pumpenteil dieser Pumpedüsen 12, im vorliegenden Fall sechs, wird in nicht dargestellter Weise mechanisch von einer Nockenwelle, Kipphebeln etc. betätigt. Jede dieser Pumpedüsen 12 besitzt ein elektromechanisches Mengenstellglied, mit welchem die Kraftstoff-Einspritzmenge je Pumpenhub einstellbar ist. Bei einer einfachen Lösung kann ein einziges elektromechanisches Stellglied vorgesehen sein, welches die Mengenstellglieder aller Pumpedüsen gemeinsam, z.B. über eine Stange betätigt. Auch kann eine übliche zentrale Einspritzpumpe vorgesehen sein, deren Regelstange mittels eines elektromechanischen Stellgliedes verstellbar ist. Der Regler 2 kann im allgemeinen auch noch Signale zur Ansteuerung weiterer Stellglieder, z.B. für ein Abgasrückführventil, erarbeiten und abgeben und ist auch noch mit weiteren, nicht gezeigten Sensoren, wie z. B. Nadelhubsensoren, verbunden, die Informationen über den Motor und/oder Fahrzeugzustand liefern (vgl. hiezu die eingangs genannte Literaturstelle). Ausgangssignale des Reglers können auch zur Bestimmung des Einspritzzeitpunktes, des Zündzeitpunktes (bei Motoren mit Fremdzündung) oder zum Verstellen von Luft- und/oder Gemischmengenklappen herangezogen werden.

Der Regler 2 weist als Recheneinheiten z.B. zwei Mikrorechner 13, 14, einen Speicher 15 oder Speicherbereich, mindestens eine Endstufe, im vorliegenden Fall sechs Endstufen 16 für die Ansteuerung der Pumpedüsen 12 und zumindest eine Schnittstelle 17 auf. Für den Informationsaustausch zwischen den Mikrorechnern 13, 14, dem Speicher 15 und der Schnittstelle 17 ist ein Bus 18 vorgesehen. Der Speicher 15 enthält das Programm oder mehrere Programme und kann anfallende Daten abspeichern.

Ein wesentlicher Teil eines elektronischen Reglers moderner Bauart ist ein Parameterspeicher, der. i.a. als programmierbarer Festwertspeicher (PROM, EPROM) ausgeführt ist und der sämtliche für die Regelung erforderlichen motor- und/oder fahrzeugspezifischen Daten und Kennfelder enthält. Ein solcher Parameterspeicher 19 ist, von dem Reglergehäuse 3 völlig getrennt, bei dem Ausführungsbeispiel in der fahrzeugseitigen Steckerleiste 4b der Steckverbindung 4 untergebracht und gegen unerlaubten Zugriff z.B. durch eine Plombe oder durch Eingießen in Kunstharz gesichert. Die Recheneinrichtungen des Reglers 2 können über eine, beispielsweise serielle Schnittstelle, die Teil der Schnittstelle 17 ist, auf den Parameterspeicher 19 zugreifen, wodurch Leitungen (und Steckkontakte) eingespart werden. Es versteht sich, daß als Verbindungsleitungen nicht nur konventionelle Kabel sondern auch Lichtwellenleiter verwendbar sind. Damit die Daten des Parameterspeichers 19 dem Regler ständig - ohne Einschränkung durch lange Zugriffszeiten - zur Verfügung stehen, kann in dem Regler 2 ein Speicherbereich 20, in der Zeichnung strichliert angedeutet, vorgesehen sein, in dem eine Kopie der Daten des Parameterspeichers 19 abgelegt werden kann. Zu Betriebsbeginn liest der Regler 2 alle Daten aus dem Parameterspeicher in den Speicherbereich 20. Während des Betriebes stehen dann diese Daten den Recheneinheiten des Reglers unmittelbar, d.h. ohne den zeitaufwendigen Umweg über die Schnittstelle 17 zur Verfügung. Sicherheitshalber kann der Regler 2 die Daten im Speicherbereich 20 mit jenen im Parameterspeicher 19 wiederkehrend vergleichen und bei Divergenzen die entsprechenden Korrekturen im Speicherbereich 20 vornehmen. Der Speicherbereich 20 kann beliebig realisiert werden, bei einer praktischen Ausführungsform ist für diesen Zweck ein CMOS-RAM vorgesehen. Eine weitere, der Zeichnung nicht entnehmbare Variante sieht einen ersten Parameterspeicher für motorspezifische Daten und einen zweiten Parameterspeicher für fahrzeugspezifische Daten vor. Der erste Parameterspeicher ist hiebei mechanisch fest an geeigneter Stelle mit dem Motor verbunden, wogegen der zweite Parameterspeicher an irgendeiner Stelle der Fahrzeugkarosserie befestigt ist. Hiedurch ist auch bei Einbau eines anderen Motors sichergestellt, daß dem Regler die richtigen Parameter zur Verfügung stehen.

Wie bereits erwähnt, muß bei oder vor dem Starten des Motors 1 der Inhalt des Parameterspeichers 19 in den Speicherbereich 20 kopiert werden. Um die hiefür erforderliche Zeit bei weiteren Starts zu verkürzen, kann vorgesehen sein, daß der Regler 2 nach dem ersten Kopieren der Daten aus diesen unter Verwendung eines festen Algorithmus ein Codewort errechnet und es an den Parameterspeicher 19 zurücksendet, wo es abgespeichert wird. Bei weiteren Fahrzeugstarts muß dann lediglich das Codewort aus dem Parameterspeicher 19 abgerufen und mit dem aus dem Inhalt des Speicherbereiches 20 errechneten Codewort verglichen werden. Bei Übereinstimmung erübrigt sich das Kopieren der Daten aus dem Parameterspeicher 19 in den Speicherbereich 20, da Identität vorliegt.

Da in dem Parameterspeicher 19 (oder in dem motorfesten ersten Parameterspeicher) alle motorspezifischen Daten enthalten sind, ist beipielsweise sogar ein Übergang von einem Motor mit einzeln angesteuerten Pumpedüsen zu einem Motor mit einer Einspritzpumpe möglich, ohne einen anderen Reglertyp verwenden zu müssen, indem in dem Regler die Endstufen für die Einzelansteuerung parallel geschaltet und die entsprechenden Ausgänge der Steckverbindung miteinander verbunden werden, um den im allgemeinen höheren Strombedarf des elektromechanischen Stellgliedes für die Reglerstange der Einspritzpumpe gerecht zu werden. Dieses Parallelschalten kann reglerintern, auf entsprechende Daten des Parameterspeichers 19 hin, automatisch erfolgen. Selbstverständlich erfolgt auch ein Umschalten der anderen Ein- und Ausgänge, z.B. der Eingänge für Geber und Sensoren, je nach Art des Motors oder Fahrzeuges auf entsprechende, im Parameterspeicher enthaltene Daten (Befehle) automatisch.

Bei der Verwendung eines "Einheitsreglers" für verschiedene Pumpen ist zu beachten, daß z.B. beim Übergang von Pumpedüsen auf eine Reihenpumpe, die nur ein Stellglied aufweist, aber einen sehr hohen Strom benötigt, auf der fahrzeugseitigen Steckverbindung die sechs Stifte für die sechs Pumpedüsen (bei einem 6-Zylindermotor) und Stellglieder direkt elektrisch miteinander verbunden werden. Gleichzeitig muß der Regler über den Parameterspeicher dazu veranlaßt werden, alle sechs Ausgangstransistoren (Endstufen) parallel anzusteuern, wobei sich, soferne MOS-Transistoren verwendet werden, die sechs Transistoren dann wie ein einziger, sechsmal leistungsfähigerer Transistor verhalten. Selbstverständlich beschränkt sich diese Lösung nicht auf die Ansteuerung von Mengenstellgliedern, da praktisch alle Stellglieder mit Ausnahme von Schrittmotoren in gleicher Weise von MOS-Leistungstransistoren mit tastverhältnismodulierten Signalen allerdings unterschiedlicher Frequenz angesteuert werden. Die Ausgangsstufen in einem Einheitsregler können als applikationsneutral angesehen werden, es muß nur für die richtige Ansteuerung entsprechend der Applikation gesorgt werden.

## Patentansprüche

1. Elektronischer Regler für Kraftfahrzeuge mit Brennkraftmaschinen, insbesondere mit Dieselmotoren, mit in einem Gehäuse angeordneten Rechen- und Regeleinheiten, die einen oder mehrere Mikrorechner samt Speichern für Programme, Daten etc. aufweisen, wobei der Regler mittels mindestens einer Reglersteckverbindung mit fahrzeug- bzw. motorfesten Gebern, Sensoren, Stellgliedern und der Betriebsspannung verbindbar ist, zumindest ein mit dem Regler verbindbarer Parameterspeicher für motor- und/oder fahrzeugspezifische Daten vorgesehen ist und die Rechen- und Regeleinheiten zur Ermittlung und Abgabe von Stellgliedansteuersignalen und anderer Ausgangssignale in Abhängigkeit der zugeführten Signale der Geber und Sensoren unter Berücksichtigung der Daten des Parameterspeichers eingerichtet sind, dadurch gekennzeichnet, daß der Parameterspeicher (19) von dem Reglergehäuse (3) getrennt fahrzeug- bzw. motorseitig untergebracht und über die Reglersteckverbindung (4) mit dem Regler (2) verbindbar ist.

2. Regler nach Anspruch 1, dadurch gekennzeichnet, daß die Verbindung zwischen dem Regler (2) und dem Parameterspeicher (19) über eine serielle Schnittstelle (17) aufgebaut ist.

3. Regler nach Anspruch 1 oder 2, dadurch gekennzeichnet, daß der Regler (2) zum Kopieren der Daten des Parameterspeichers (19) in einem reglerinternen Speicherbereich (20) eingerichtet ist.

4. Regler nach einem der Ansprüche 1 bis 3, dadurch gekennzeichnet, daß der Regler (2) zum wiederkehrenden Vergleich der kopierten Daten mit den Originaldaten des Parameterspeichers (19) und zur entsprechenden Korrektur im Speicherbereich (20) eingerichtet ist.

5. Regler nach einem der Ansprüche 1 bis 4, dadurch gekennzeichnet, daß der Parameterspeicher (19) ein (einmal)programmierbarer Festwertspeicher ist.

6. Regler nach einem der Ansprüche 1 bis 5, dadurch gekennzeichnet, daß der Parameterspeicher (19) die motor- und fahrzeugspezifischen Daten enthält und in einem fahrzeugseitigen Steckerteil (4b) der Reglersteckverbindung untergebracht ist.

7. Regler nach Anspruch 6, dadurch gekennzeichnet, daß der Parameterspeicher (19) in dem Gehäuse des Steckerteils (4b) eingegossen ist.

8. Regler nach Anspruch 6, dadurch gekennzeichnet, daß der Parameterspeicher (19) als mit dem Steckerteil verbindbares Steckmodul ausgebildet ist.

9. Regler nach einem der Ansprüche 1 bis 5, dadurch gekennzeichnet, daß ein mit dem Motor (1) mechanisch verbundener erster Parameterspeicher für motorspezifische Daten und ein mit dem Fahrzeug mechanisch verbundener zweiter Parameterspeicher für fahrzeugspezifische Daten vorgesehen sind.

10. Regler nach einem der Ansprüche 1 bis 9, mit n Leistungsendstufen für die Ansteuerung von Stellgliedern, z.B. von Pumpedüsenstellgliedern, dadurch gekennzeichnet, daß der Regler zur Parallelschaltung einiger oder aller Leistungsendstufen (16) zur gemeinsamen Ansteuerung eines einzigen Stellgliedes, wie für die Regelstange einer Einspritzpumpe, in Abhängigkeit eines motorspezifischen, im Parameterspeicher (19) enthaltenen Befehls eingerichtet ist.

11. Regler nach einem der Ansprüche 1 bis 10, dadurch gekennzeichnet, daß der Regler (2) zur Umschaltung der Eingänge für die Geber und Sensoren in Abhängigkeit von im Parameterspeicher (19) enthaltenen Befehlen eingerichtet ist.

12. Regler nach einem der Ansprüche 1 bis 11, dadurch gekennzeichnet, daß in dem Regler (2) nach dem erstmaligen Kopieren der Daten aus dem Parameterspeicher (19) in den Speicherbereich (20) aus den Daten ein Codewort nach einem vorgegebenen Algorithmus berechnet und in den Parameterspeicher (19) geschrieben wird und bei weiteren Inbetriebnahmen das Kopieren entfällt, soferne das aus dem Parameterspeicher (19) abgerufene Codewort mit dem errechneten übereinstimmt.